# EUROPÄISCHE PATENTANMELDUNG

(11) **EP 3 593 932 A1**
(43) Veröffentlichungstag der Anmeldung: **15.01.2020**
(21) Anmeldenummer: 18182940.9
(22) Anmeldetag: 11.07.2018
(51) Int. Cl.: B23K 9/26, B23K 9/20, B23K 9/32, B23K 11/00, B23K 11/36, B23Q 7/10

(54) **BOLZENSCHWEISSSYSTEM MIT EINEM ZUR AUFNAHME VON MEHREREN FORMSTÜCKEN AUSGEBILDETEN FORMSTÜCKTRÄGER**

(71) Anmelder: MAGNA STEYR Fahrzeugtechnik AG & Co KG, 8041 Graz (AT)
(72) Erfinder: SPANNER, Gerhard, 8262 Ilz (AT)
(74) Vertreter: Zangger, Bernd

(57) **Zusammenfassung**

Ein Bolzenschweißsystem, insbesondere zum Verschweißen von T-Bolzen an Werkstücken (1) wie Rohkarosserieteilen, umfassend einen robotergesteuerten, den Schweißbolzen im Wesentlichen senkrecht zur Werkstückfläche entlang einer Bolzenvorschubachse (A) vorschiebenden und mit dieser verschweißenden Bolzenschweißkopf (2), wobei der Bolzenschweißkopf (2) durch einen Positionierantrieb (3) in einer Positionierrichtung (P), die im Wesentlichen normal auf die Bolzenvorschubachse (A) steht, beweglich ist, wobei die Positionierung des Bolzenschweißkopfs (2) in der Positionierrichtung (P) mittels eines Formstückes (4) erfolgt, so dass das Formstück (4) in einer Verwendungsstellung einen mechanisch blockierenden Anschlag für den Bolzenschweißkopf (2) an der Werkstückkontur in der Positionierrichtung (P) bildet, wobei das Bolzenschweißsystem einen zur Aufnahme von mehreren Formstücken (4) ausgebildeten Formstückträger (5) aufweist und einen Formstückträgerantrieb (6), wobei mittels des Formstückträgerantriebs (6) wahlweise eines der im Formstückträger (5) aufgenommenen Formstücke (4) in die Verwendungsstellung bringbar ist.

## Beschreibung

### Gebiet der Erfindung

Die vorliegende Erfindung betrifft ein Bolzenschweißsystem, insbesondere zum Verschweißen von T-Bolzen an Rohkarosserieteilen, und ein Verfahren zur Herstellung von Kraftfahrzeugen mittels eines solchen Bolzenschweißsystems.

### Stand der Technik

Schweißbolzen mit erweitertem Kopf, sogenannte T-Bolzen, werden in der Automobilindustrie häufig benötigt, um Anbauteile an einem mit derartigen Bolzen ausgerüsteten Rohkarosserieteil, beispielsweise eine Dachleiste am Dachkanal eines Kraftfahrzeugs, sicher zu befestigen.

Ein Schweißprozess hierfür ist nach dem Stand der Technik, zum Beispiel im Wege des Hubzündverfahrens unter Verwendung von hydraulischen oder pneumatischen Linearantrieben zur Hubsteuerung des Schweißgerätekopfes in Bolzenvorschubrichtung nach der DE 30 38 557 A1 oder der DE 44 27 370 C1, an sich bekannt. Eine maßgenaue Ansteuerung des Schweißgerätekopfes in die Schweißposition, gegeben durch auf die Werkstückkontur bezogene exakte Abstände, ist jedoch mit erheblichen Schwierigkeiten verbunden. So ist eine manuelle Positionierung des Gerätekopfes mit Hilfe von werkstückspezifischen Schweißschablonen äußerst arbeits- und kostenaufwändig. Robotergesteuerte Systeme mit fest vorprogrammierten Schweißpositionen hingegen lassen Werkstücktoleranzen und Lageabweichungen des Werkstücks bezüglich des Roboters unberücksichtigt und arbeiten dementsprechend ungenau.

Die EP 02 97 031 A1 offenbart Schweißsysteme, die zusätzliche, der Robotersteuerung zugeordnete Regelkreise, enthalten, welche die Werkstückkontur durch elektrische oder optoelektronische Abstandssensoren abtasten und in die Robotersteuerung derart eingreifen, dass die vorprogrammierte nach Maßgabe der aus der abgetasteten Werkstückkontur und dem Funktionsmaß errechneten Schweißposition korrigiert wird. Solche Regelkreise erfordern jedoch einen erhöhten Bau- und Rechenaufwand und sind störanfällig. Bei ausgedehnteren Werkstücken liegt die Positionsgenauigkeit des Schweißbolzens bei derartigen Schweißsystemen aufgrund von Roboterinstabilitäten und Nichlinearitäten in der Signalverarbeitung in einem relativ großen Toleranzbereich von größenordnungsmäßig 1 mm.

Die WO 01/62426 A1 offenbart ein Verfahren zum Positionieren eines Schweissbolzens, der in einem Bolzenschweisskopf gehaltert ist, wobei der Bolzenschweisskopf an einer programmierbaren Mehrachsenhandhabungseinrichtung vorgesehen ist und wobei der Schweissbolzen beim Verschweissen in einer Vorschubrichtung zu einem Werkstück zugestellt wird, an dem er angeschweisst wird, umfassend die Schritte : a) der Bolzenschweisskopf wird von der Handhabungseinrichtung an das Werkstück herangebracht, b) die Handhabungseinrichtung verfährt den Bolzenschweisskopf quer zur Vorschubrichtung, in der der Schweissbolzen beim späteren Schweissen bewegt wird, bis eine am Bolzenschweisskopf vorgesehene Kontakterkennungseinrichtung eine Seitenfläche des Werkstücks kontaktiert, c) die Handhabungseinrichtung verfährt den Bolzenschweisskopf quer zur Vorschubrichtung um ein vorbestimmtes Sollmass in eine Schweissausgangsposition und d) der Schweissbolzen wird in Vorschubrichtung zur Werkstückoberfläche bis auf Kontakt mit ihr verfahren.

Aus der EP1252964 A2 ist ein Bolzenschweißsystem, insbesondere zum Verschweißen von T-Bolzen an Rohkarosserieteilen, bekannt, mit einem robotergesteuerten, den Schweißbolzen im Wesentlichen senkrecht zur Werkstückfläche vorschiebenden und mit dieser verschweißenden Bolzenschweißkopf, wobei die Bolzenvorschubachse in der Schweißposition des Bolzenschweißkopfes einen als Funktionsmaß vorgegebenen Abstand zur Werkstückkontur aufweist, wobei der Bolzenschweißkopf durch einen stellkraftbegrenzten Antrieb quer zur Bolzenvorschubachse in Richtung der Werkstückkontur verfahrbar und mit einem im Abstand des Funktionsmaßes bewegungsfest mit dem Bolzenschweißkopf verbundenen, in der Anlageposition an der Werkstückkontur die Stellbewegung des Bolzenschweißkopfes mechanisch blockierenden Anschlag versehen ist.

Insbesondere bei ausgedehnten Werkstücken müssen T-Bolzen an unterschiedlichen Schweißpunkten in unterschiedlichen Positionen zu einer jeweiligen Bezugskante oder Bezugsfläche des Werkstücks gesetzt werden.

### Zusammenfassung der Erfindung

Es ist eine Aufgabe der Erfindung, ein Bolzenschweißsystem anzugeben, dass ein exaktes, insbesondere robotergesteuertes, Positionieren von Bolzen auch bei ausgedehnten Werkstücken und in unterschiedlichen relativen Positionen zum Werkstück auf einfache und zuverlässige Weise ermöglicht. Eine weitere Aufgabe ist es, ein Verfahren zur Herstellung von Kraftfahrzeugen mittels eines solchen Bolzenschweißsystems anzugeben, wobei insbesondere auch ein Verschweißen von T-Bolzen an ausgedehnteren Rohkarosserieteilen erfolgen kann.

Die Lösung der Aufgabe erfolgt durch ein Bolzenschweißsystem, insbesondere zum Verschweißen von T-Bolzen an Werkstücken wie Rohkarosserieteilen, umfassend einen robotergesteuerten, den Schweißbolzen im Wesentlichen senkrecht zur Werkstückfläche entlang einer Bolzenvorschubachse vorschiebenden und mit dieser verschweißenden Bolzenschweißkopf, wobei der Bolzenschweißkopf durch einen Positionierantrieb in einer Positionierrichtung, die im Wesentlichen normal auf die Bolzenvorschubachse steht, beweglich ist, wobei die Positionierung des Bolzenschweißkopfs in der Positionierrichtung mittels eines Formstückes erfolgt, so dass das Formstück in einer Verwendungsstellung einen mechanisch blockierenden Anschlag für den Bolzenschweißkopf an der Werkstückkontur in der Positionierrichtung bildet, wobei das Bolzenschweißsystem einen zur Aufnahme von mehreren Formstücken ausgebildeten Formstückträger aufweist und einen Formstückträgerantrieb, wobei mittels des Formstückträgerantriebs wahlweise eines der im Formstückträger aufgenommenen Formstücke in die Verwendungsstellung bringbar ist.

Erfindungsgemäß verfügt ein Bolzenschweißsystem über einen Formstückträger, in welchem mehrere, insbesondere unterschiedliche Formstücke für verschiedene Positionierungen, insbesondere an unterschiedlichen Positionen an einem Werkstück, vorgehalten werden können. Die Formstücke können unterschiedliche Geometrien aufweisen, unterschiedliche Höhen und Formen, um den Bolzenschweißkopfs relativ zu unterschiedlichen Werkstückgeometrien exakt positionieren zu können.

Während der Bearbeitung eines Werkstückes kann somit mittels des Formstückträgerantriebs auf einfache Weise und insbesondere automatisiert ein passendes Formstück für den jeweiligen Schweißpunkt aktiviert werden, also in eine Verwendungsstellung gebracht werden, so dass das Formstück für den nächsten Schweißvorgang zur Positionierung verwendet werden kann.

Weiterbildungen der Erfindung sind in den abhängigen Ansprüchen, der Beschreibung sowie den beigefügten Zeichnungen angegeben.

Vorzugsweise ist der Formstückträger ein Rotationselement, also ein Bauteil, das für eine Rotation ausgebildet ist, insbesondere drehbar gelagert. Ein Formstückträgerantrieb ermöglicht bevorzugt eine Rotation eines gewünschten Formstückes in die Verwendungsstellung.

Bevorzugt ist der Formstückträger um eine Hohlwelle rotierbar, wobei besonders bevorzugt mindestens ein Kabel durch die Hohlwelle geführt ist. Insbesondere können Kabel zur Verbindung von Sensoren an den Formstücken mit einer Steuereinheit durch die Hohlwelle geführt sein.

Vorzugsweise umfasst der Formstückträger vier Schenkel zur Aufnahme von vier verschiedenen Formstücken. Alternativ kann der Formstückträger beispielsweise sechs oder acht Schenkel umfassen, wobei jeder Schenkel zur Aufnahme eines Formstückes ausgebildet ist. Der Formstückträger ist bevorzugt sternförmig. Die Schenkel sind bevorzugt rotationssymmetrisch am Formstückträger ausgebildet. Die Formstücke sind daher bevorzugt rotationssymmetrisch am Formstückträger gehalten.

Bevorzugt ist eine Steuereinheit vorgesehen, wobei mittels der Steuereinheit, abhängig von einem der Steuereinheit zugänglichen Auswahlkriterium, insbesondere abhängig vom jeweiligen Schweißpunkt, der Formstückträgerantrieb automatisiert aktiviert wird, um ein dem Auswahlkriterium, insbesondere dem Schweißpunkt bzw. der Lage des Schweißpunktes am Werkstück entsprechendes Formstück in die Verwendungsstellung zu bringen.

Der Formstückträgerantrieb kann einen Servomotor umfassen. Die Antriebskraft des Servomotors kann über einen Zahnriemen auf den Formstückträger übertragen werden, insbesondere um den Formstückträger zu rotieren.

Bevorzugt sind zwischen den Formstücken und dem Formstückträger verstellbare Unterlagsblätter angeordnet, um die Formstücke auf dem Träger zu justieren.

Vorzugsweise ist der Bolzenschweißkopf zur Positionierung in der Positionierrichtung um einen Drehpunkt verschwenkbar.

Bevorzugt ist zumindest ein Zylinder, insbesondere Pneumatikzylinder, besonders bevorzugt zwei Zylinder, zum Verschwenken des Bolzenschweißkopfs in der Positionierrichtung, auf der dem Kopf des Bolzenschweißkopfs abgewandten Seite des Drehpunktes des Bolzenschweißkopfs angeordnet. Besonders bevorzugt ist auch ein Federelement auf der dem Kopf des Bolzenschweißkopfs abgewandten Seite des Drehpunktes des Bolzenschweißkopfs angeordnet, also auf der Seite des Zylinders oder der Zylinder.

Der Bolzenschweißkopf kann zur Positionierung in Richtung der Bolzenvorschubachse einen Anschlagstift aufweisen, so dass der Anschlagstift einen mechanisch blockierenden Anschlag für den Bolzenschweißkopf an der Werkstückkontur in einem vorgegebenen Abstand des Bolzenschweißkopfs in Richtung der Bolzenvorschubachse zur Werkstückkontur bildet.

Ein Verfahren zur Herstellung von Kraftfahrzeugen, kann erfindungsgemäß vorsehen, dass im Zuge der Herstellung eines Kraftfahrzeuges zumindest ein T-Bolzen an einen Rohkarosserieteil mittels eines Bolzenschweißsystems wie zuvor beschrieben verschweißt wird. Bevorzugt werden mehrere T-Bolzen an einem Rohkarosserieteil mittels eines solchen Bolzenschweißsystems verschweißt, wobei unterschiedliche Formstücke, je nach Schweißpunkt, durch den Formstückträgerantrieb in die Verwendungsstellung gebracht werden.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung eines erfindungsgemäßen Bolzenschweißsystems aus einer ersten Perspektive.
- Fig. 2: ist eine dreidimensionale Darstellung eines erfindungsgemäßen Bolzenschweißsystems gemäß Fig. 1 aus einer zweiten Perspektive.
- Fig. 3: ist eine dreidimensionale Darstellung eines erfindungsgemäßen Bolzenschweißsystems gemäß Fig. 1 aus einer dritten Perspektive.

### Detaillierte Beschreibung der Erfindung

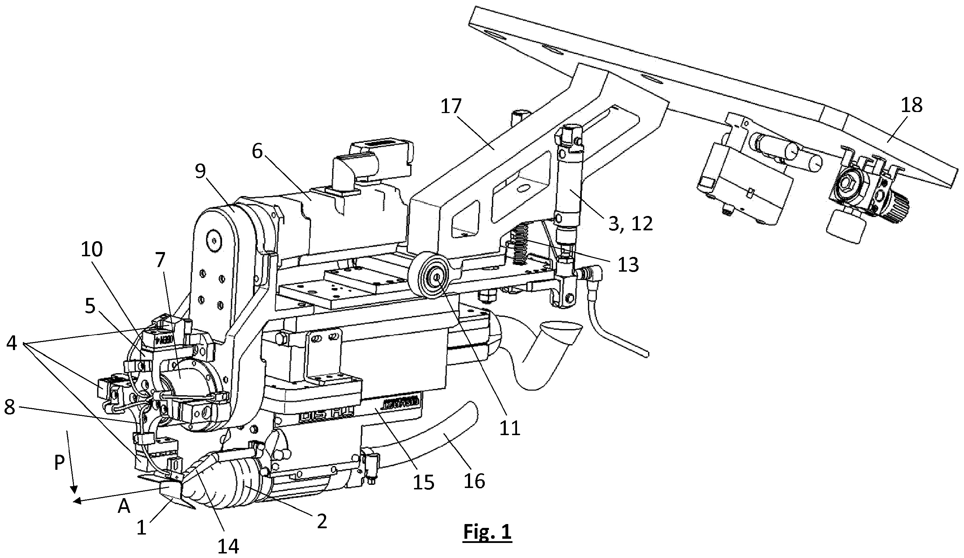

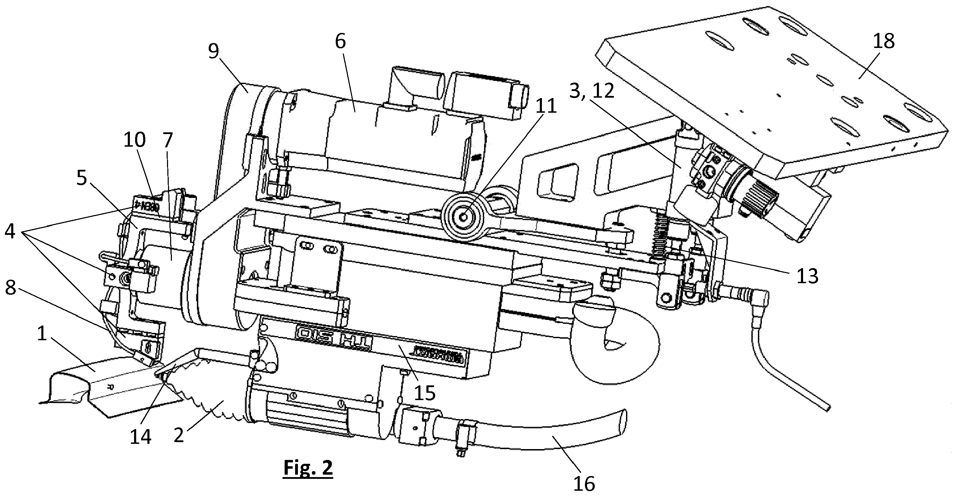

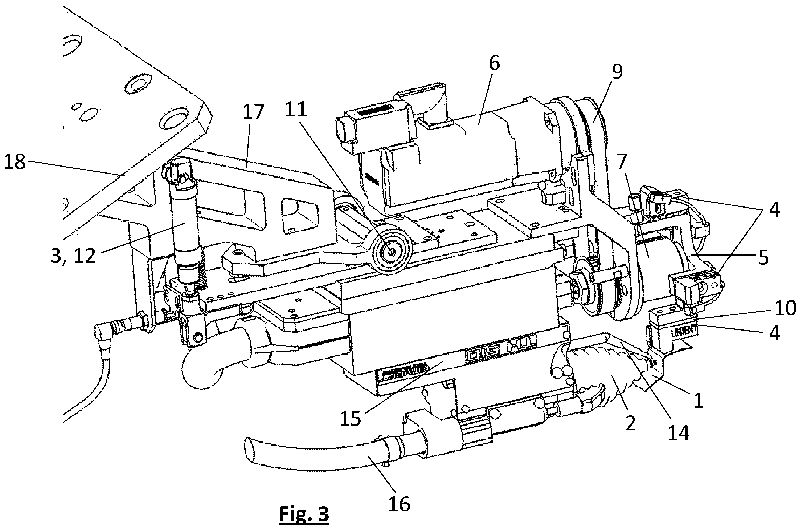

In den Fig. 1-3 ist ein erfindungsgemäßes Bolzenschweißsystem in verschiedenen Perspektiven dargestellt, insbesondere zum Verschweißen von T-Bolzen an Werkstücken 1 wie Rohkarosserieteilen, umfassend einen robotergesteuerten, den Schweißbolzen im Wesentlichen senkrecht zur Werkstückfläche entlang einer Bolzenvorschubachse A vorschiebenden und mit dieser verschweißenden Bolzenschweißkopf 2. Der Bolzenschweißkopf 2 ist mittels einer Linearführung 15 im Bolzenschweißsystem in Richtung der Bolzenvorschubachse A verschieblich.

Bolzen können dem Bolzenschweißkopf 2 durch eine Zuführeinheit 16, beispielsweise pneumatisch, zugeführt werden.

Der Bolzenschweißkopf 2 kann durch einen Positionierantrieb 3 in einer Positionierrichtung P, die im Wesentlichen normal auf die Bolzenvorschubachse A steht, bewegt werden. Der Bolzenschweißkopf 2, mitsamt der Linearführung 15, ist zur Positionierung in der Positionierrichtung P um einen Drehpunkt 11 verschwenkbar gelagert.

Zwei Zylinder 12 zum Verschwenken des Bolzenschweißkopfs 2 in der Positionierrichtung P sind auf der dem Kopfende des Bolzenschweißkopfs 2 abgewandten Seite des Drehpunktes 11 angeordnet, links und rechts einer vertikalen Mittelebene durch das Bolzenschweißsystem, also jeweils seitlich zu einem Haltearm 17, der eine Anschlussplatte 18, zum Anschluss des Bolzenschweißsystems an einen Roboter, mit dem Drehpunkt 11 verbindet.

Zwischen den Zylindern 12 ist ein Federelement 13 zur Dämpfung der Bewegung des Bolzenschweißkopfes 2 mittels der Zylinder 12 angeordnet.

Der Positionierantrieb 3 umfasst daher in der dargestellten Ausführung zwei Zylinder 12, insbesondere Pneumatik- oder Hydraulikzylinder, und ein Federelement 13.

Die Positionierung des Bolzenschweißkopfs 2 in der Positionierrichtung P erfolgt mittels eines Formstückes 4, insofern als jeweils ein Formstück 4 in einer Verwendungsstellung einen mechanisch blockierenden Anschlag für den Bolzenschweißkopf 2 an der Werkstückkontur in der Positionierrichtung P bildet.

Erfindungsgemäß weist das Bolzenschweißsystem einen zur Aufnahme von vier Formstücken 4 ausgebildeten Formstückträger 5 auf.

Der Formstückträger 5 ist ein Rotationselement und kann mittels eines Formstückträgerantriebs 6 rotiert werden, um ein gewünschtes Formstück 4 in die Verwendungsstellung - in Fig. 1 unten - zu bringen.

Der Formstückträger 5 weist eine symmetrische Sternform mit vier Schenkeln auf, wobei an jedem Schenkel ein Formstück 4 gehalten ist.

Zwischen den Formstücken 4 und dem Formstückträger 5 ist jeweils ein verstellbares Unterlagsblatt 10 angeordnet, zur Einstellung der genauen Lage der Formstücke.

Der Formstückträger 5 ist um eine Hohlwelle 7 rotierbar, wobei jeweils ein Kabel 8 pro Formstück 4 durch die Hohlwelle 7 zu den Formstücken 4 geführt ist. Der Formstückträger 5 ist daher so eingerichtet, dass nur eine Rotation um maximal 180 Grad in jede Richtung möglich ist, um die Kabel 8 nicht zu beschädigen.

Mittels Formstückträgerantrieb 6, aktiviert durch eine Steuereinheit, kann automatisiert ein geeignetes Formstück 4 in die Verwendungsstellung gebracht werden.

Der Formstückträgerantrieb 6 umfasst einen Servomotor, dessen Drehmoment über einen Zahnriemen 9 zum Formstückträger 5 übertragen wird.

Zusätzlich zur beschriebenen Positionierung des Bolzenschweißkopfs 2 in der Positionierrichtung P erfolgt eine Positionierung in Richtung der Bolzenvorschubachse A mittels eines Anschlagstifts 14, der über das Kopfende des Bolzenschweißkopfs 2 axial hinausragt, so dass der Anschlagstift 14 einen Anschlag für den Bolzenschweißkopf 2 an der Werkstückkontur in Richtung der Bolzenvorschubachse A bildet.

### Bezugszeichenliste

- 1: Werkstück
- 2: Bolzenschweißkopf
- 3: Positionierantrieb
- 4: Formstück
- 5: Formstückträger
- 6: Formstückträgerantrieb
- 7: Hohlwelle
- 8: Kabel
- 9: Zahnriemen
- 10: Unterlagsblatt
- 11: Drehpunkt
- 12: Zylinder
- 13: Federelement
- 14: Anschlagstift
- 15: Linearführung
- 16: Zuführeinheit
- 17: Haltearm
- 18: Anschlussplatte

- A: Bolzenvorschubachse
- P: Positionierrichtung

## Patentansprüche

1. Bolzenschweißsystem, insbesondere zum Verschweißen von T-Bolzen an Werkstücken (1) wie Rohkarosserieteilen, umfassend einen robotergesteuerten, den Schweißbolzen im Wesentlichen senkrecht zur Werkstückfläche entlang einer Bolzenvorschubachse (A) vorschiebenden und mit dieser verschweißenden Bolzenschweißkopf (2), wobei der Bolzenschweißkopf (2) durch einen Positionierantrieb (3) in einer Positionierrichtung (P), die im Wesentlichen normal auf die Bolzenvorschubachse (A) steht, beweglich ist, wobei die Positionierung des Bolzenschweißkopfs (2) in der Positionierrichtung (P) mittels eines Formstückes (4) erfolgt, so dass das Formstück (4) in einer Verwendungsstellung einen mechanisch blockierenden Anschlag für den Bolzenschweißkopf (2) an der Werkstückkontur in der Positionierrichtung (P) bildet, **dadurch gekennzeichnet, dass** das Bolzenschweißsystem einen zur Aufnahme von mehreren Formstücken (4) ausgebildeten Formstückträger (5) aufweist und einen Formstückträgerantrieb (6), wobei mittels des Formstückträgerantriebs (6) wahlweise eines der im Formstückträger (5) aufgenommenen Formstücke (4) in die Verwendungsstellung bringbar ist.

2. Bolzenschweißsystem nach Anspruch 1,
**dadurch gekennzeichnet, dass** der Formstückträger (5) ein Rotationselement ist und der Formstückträgerantrieb (6) eine Rotation eines gewünschten Formstückes (4) in die Verwendungsstellung ermöglicht.

3. Bolzenschweißsystem nach Anspruch 2,
**dadurch gekennzeichnet, dass** der Formstückträger (5) um eine Hohlwelle (7) rotierbar ist, wobei bevorzugt mindestens ein Kabel (8) durch die Hohlwelle (7) geführt ist.

4. Bolzenschweißsystem nach zumindest einem der vorhergehenden Ansprüche,
**dadurch gekennzeichnet, dass** der Formstückträger (5) vier oder sechs oder acht Schenkel umfasst, wobei jeder Schenkel zur Aufnahme eines Formstückes (4) ausgebildet ist.

5. Bolzenschweißsystem nach zumindest einem der vorhergehenden Ansprüche,
**dadurch gekennzeichnet, dass** eine Steuereinheit vorgesehen ist, wobei mittels der Steuereinheit, abhängig von einem der Steuereinheit zugänglichen Auswahlkriterium, der Formstückträgerantrieb (6) automatisiert aktiviert wird, um ein dem Auswahlkriterium entsprechendes Formstück (4) in die Verwendungsstellung zu bringen.

6. Bolzenschweißsystem nach zumindest einem der vorhergehenden Ansprüche,
**dadurch gekennzeichnet, dass** der Formstückträgerantrieb (6) einen Servomotor umfasst und bevorzugt auch einen Zahnriemen (9) zwischen dem Servomotor und dem Formstückträger (5) umfasst.

7. Bolzenschweißsystem nach zumindest einem der vorhergehenden Ansprüche,
**dadurch gekennzeichnet, dass** zwischen den Formstücken (4) und dem Formstückträger (5) verstellbare Unterlagsblätter (10) angeordnet sind.

8. Bolzenschweißsystem nach zumindest einem der vorhergehenden Ansprüche,
**dadurch gekennzeichnet, dass** der Bolzenschweißkopf (2) zur Positionierung in der Positionierrichtung (P) um einen Drehpunkt (11) verschwenkbar ist.

9. Bolzenschweißsystem nach Anspruch 8,
**dadurch gekennzeichnet, dass** zumindest ein Zylinder (12) zum Verschwenken des Bolzenschweißkopfs (2) in der Positionierrichtung (P), auf der dem Kopfende des Bolzenschweißkopfs (2) abgewandten Seite des Drehpunktes (11) angeordnet ist, bevorzugt auch ein Federelement (13).

10. Bolzenschweißsystem nach zumindest einem der vorhergehenden Ansprüche,
**dadurch gekennzeichnet, dass** der Bolzenschweißkopf (2) zur Positionierung in Richtung der Bolzenvorschubachse (A) einen Anschlagstift (14) aufweist, so dass der Anschlagstift (14) einen mechanisch blockierenden Anschlag für den Bolzenschweißkopf (2) an der Werkstückkontur in einem vorgegebenen Abstand des Bolzenschweißkopfs (2) in Richtung der Bolzenvorschubachse (A) zur Werkstückkontur bildet.

11. Verfahren zur Herstellung von Kraftfahrzeugen, wobei im Zuge der Herstellung eines Kraftfahrzeuges zumindest ein T-Bolzen an einen Rohkarosserieteil mittels eines Bolzenschweißsystems nach zumindest einem der vorhergehenden Ansprüche verschweißt wird.
